# EUROPEAN PATENT SPECIFICATION

(11) **EP 3 169 739 B1**
(45) Date of publication and mention of the grant of the patent: **23.10.2019**
(21) Application number: 14897533.7
(22) Date of filing: 17.07.2014
(51) Int. Cl.: C09J 201/00, B32B 7/12, C09D 123/08, C09D 123/00, C09D 131/04, C09D 153/02, B32B 27/12, B32B 27/18, B32B 27/34, B32B 27/36

(54) **METHOD FOR FABRIC-ELASTOMER BONDING**
VERFAHREN ZUM STOFF-ELASTOMER-VERBINDUNG
PROCÉDÉ DE LIAISON D'UN TISSU À UN ÉLASTOMÈRE

(43) Date of publication of application: 24.05.2017
(73) Proprietor: Dow Global Technologies LLC, Midland, MI 48674 (US)
(72) Inventor: CHEN, Yong, Shanghai 201210 (CN); CHEN, Yongchun, Shanghai 201210 (CN); GU, Weichao, Shanghai 201203 (CN); LIANG, Yongfu, Midland, MI 48674 (US); PANG, Xiaoyi, Shanghai 201102 (CN); YU, Haiyang, Shanghai 201300 (CN)
(74) Representative: Houghton, Mark Phillip
(86) International application number: PCT/CN2014/082367
(87) International publication number: WO 2016/008126

(56) References cited:
- EP-A1- 1 595 917
- EP-A1- 1 911 771
- EP-A2- 1 172 407
- CN-A- 102 076 800
- CN-A- 102 766 414
- CN-A- 102 766 415
- CN-A- 102 766 416
- CN-Y- 2 604 457
- JP-A- 2002 012 812
- US-A1- 2007 160 833
- US-A1- 2007 160 833
- US-A1- 2011 226 416

## Description

This invention relates to a method for bonding fabric and a polyolefin elastomer using an aqueous adhesive.

The use of polyolefin resin dispersions in bonding polyolefin elastomers to fabric has been described. For example, JP2002-012812 discloses an aqueous polyolefin dispersion for application of a skin coating on fabrics. However, the prior art does not disclose the one-component adhesive formulation disclosed in the present application.

EP 1595917 and US 2007/0160833 disclose aqueous dispersions.

The problem addressed by the present invention is to provide good bonding of fabrics to elastomeric materials.

### STATEMENT OF INVENTION

The present invention provides a method for bonding a fabric to a polyolefin elastomer; said method comprising applying to the fabric: (a) from 40 to 80 wt% of an aqueous dispersion of a thermoplastic polymer; and (b) from 60 to 20 wt% of an aqueous dispersion of a rosin, wherein percentages are based on total dry weight of thermoplastic polymer and rosin, wherein the thermoplastic polymer is a styrene-ethylene-butene-styrene block copolymer or a maleic anhydride-modified ethylene-vinyl acetate copolymer.

### DETAILED DESCRIPTION

Percentages are weight percentages (wt%) and temperatures are in °C, unless specified otherwise. References to room temperature (RT) or ambient temperature indicate a temperature from 20-25 °C; unless otherwise specified, preparations and testing were performed at ambient temperature. Weight percentages of monomer residues are based on the total weight of monomer residues in the polymer. Weight percentages of polymers and rosins are specified on a dry weight basis.

Preferably, the fabric is a synthetic fabric, i.e., one comprising at least 40 wt% of a synthetic polymer, preferably at least 50 wt%, preferably at least 60 wt%, preferably at least 70 wt%, preferably at least 80 wt%, preferably at least 90 wt%. Preferred synthetic fabrics include those comprising polyamide fibers (e.g., NYLON) or polyester fibers (preferably polyethylene terephthalate (PET)). Preferably, the fabric has a weight from 100 to 500, preferably from 150 to 400, preferably from 200 to 350, grams per square meter (g/m²).

The polyolefin elastomer is a polymer or copolymer comprising at least one non-polar (i.e., containing only carbon and hydrogen) olefin-based polymer. Each at least one non-polar olefin-based polymer comprises at least 50 wt% polymerized units of olefinic monomers and no polar component (i.e., units of monomers containing elements other than carbon and hydrogen). Preferably, the non-polar olefin-based polymer comprises a propylene/alpha-olefin copolymer, preferably a propylene/ethylene copolymer, and at least one of (i) a styrenic block copolymer, (ii) a homogeneously branched ethylene/alpha-olefin copolymer, (iii) an olefin block copolymer, and (iv) a random polypropylene copolymer. Preferably, the middle foam layer comprises a propylene/alpha-olefin copolymer and at least two, three or all four of components (i)-(iv). The at least one non-polar olefin-based polymer can comprise a single propylene/alpha-olefin copolymer or a blend of two or more propylene/alpha-olefin copolymers. Likewise, each of the (i) a styrenic block copolymer, (ii) a homogeneously branched ethylene/alpha-olefin copolymer, (iii) an olefin block copolymer, and (iv) a random polypropylene copolymer can be present neat or as a blend of two or more copolymers. The at least one non-polar olefin-based polymer can also comprise one or more optional additives such as processing aids, extenders, blocking agents, pigments and/or dyes, antioxidants, UV-stabilizers and/or absorbers, flame retardants, fillers (such as talc, calcium carbonate), and the like.

Preferably, the at least one non-polar olefin-based polymer comprises at least t 40, preferably at least 50, weight percent (wt%) propylene/alpha-olefin copolymer. The maximum amount of propylene/alpha-olefin copolymer in the at least one polar olefin-based polymer preferably does not exceed 80, preferably does not exceed 70, wt%. The middle foam layer can be compositionally the same as the top skin layer with the exception of the gas and by-products attributable to the foaming process.

The total amount of (i) styrenic block copolymer, (ii) homogeneously branched, linear ethylene/alpha-olefin copolymer, (iii) olefin block copolymer, and (iv) random polypropylene copolymer in the at least one polar olefin-based polymer preferably is at least 10, preferably at least 20, preferably at least 30, wt%. The maximum total amount of (i) styrenic block copolymer, (ii) homogeneously branched ethylene/alpha-olefin copolymer, (iii) olefin block copolymer, and (iv) random polypropylene copolymer in the middle foam layer preferably does not exceed 70, preferably does not exceed 60, preferably does not exceed 50, wt%.

The propylene/alpha-olefin copolymer preferably is characterized as having substantially isotactic propylene sequences. "Substantially isotactic propylene sequences" means that the sequences have an isotactic triad (mm) measured by ¹³C NMR of greater than 0.85; preferably greater than 0.90; preferably greater than 0.92; preferably greater than 0.93. Isotactic triads are well-known in the art and are described in, for example, U.S. Patent 5,504,172 and International Publication No. WO 00/01745, which refers to the isotactic sequence in terms of a triad unit in the copolymer molecular chain determined by ¹³C NMR spectra.

The propylene/alpha-olefin copolymer preferably has a melt flow rate (MFR) in the range of from 0.1 to 25 g/10 minutes, measured in accordance with ASTM D- 1238 (at 230°C/2.16 Kg). All individual values and sub-ranges from 0.1 to 25 g/10 minutes are included and disclosed by this range; for example, the MFR can be from a lower limit of 0.1 g/10 minutes, 0.2 g/10 minutes, or 0.5 g/10 minutes to an upper limit of 25 g/10 minutes, 15 g/10 minutes, 10 g/10 minutes, 8 g/10 minutes, or 5 g/10 minutes. For example, the propylene/alpha-olefin copolymer may have a MFR in the range of 0.1 to 10 g/10 minutes; or the propylene/alpha-olefin copolymer may have a MFR in the range of 0.2 to 10 g/10 minutes. In a preferred embodiment, the propylene/alpha-olefin is a propylene/ethylene copolymer.

Preferably, the propylene/alpha-olefin copolymer has a density from 0.85 to 0.89 g/cc. All individual values and sub-ranges from 0.85 to 0.89 g/cc are included and disclosed herein; for example, the density can be from a lower limit of 0.85, 0.86, 0.87 or 0.88 g/cc to an upper limit of 0.855, 0.865, 0.875, 0.885 or 0.89 g/cc. For example, the density can be from 0.85 to 0.89 g/cc, or in the alternative, from 0.85 to 0.87 g/cc, or in the alternative, from 0.87 to 0.89 g/cc, or in the alternative, from 0.86 to 0.888 g/cc. Preferably, the propylene/alpha-olefin is a propylene/ethylene copolymer.

The propylene/alpha-olefin copolymer comprises units derived from propylene and one or more alpha-olefin comonomers. Exemplary comonomers utilized to manufacture the propylene/alpha-olefin copolymer are C₂ to C₁₀ alpha-olefins; for example, C₂, C₄, C₆ and C₈ alpha-olefms. The propylene/alpha-olefin copolymer comprises from 1 to 30 wt% of one or more units derived from one or more alpha-olefin comonomers.

The propylene/alpha-olefin copolymer has a molecular weight distribution (MWD), defined as weight average molecular weight divided by number average molecular weight (M_{w}/Mₙ) of 3.5 or less; or 3.0 or less; or from 1.8 to 3.0. In a further embodiment, the propylene/alpha-olefin is a propylene/ethylene copolymer. Such propylene/alpha-olefin copolymers are further described in the U.S. Patent 6,960,635 and 6,525,157. Such propylene/alpha-olefin copolymers are commercially available from The Dow Chemical Company, under the trade name VERSIFY, or from ExxonMobil Chemical Company, under the trade name VISTAMAXX.

As used herein, the term anhydride and/or carboxylic acid functionalized, olefin-based polymer refers to an olefin-based polymer into, or onto, which maleic anhydride and/or carboxylic acid functional groups are grafted. Grafting reactions, are described for example in U.S. Patents 8,450,430 and 7,763,692. Alternatively, the functional group may be present in a copolymer (i.e., carboxylic acid functional group) which is copolymerized with the olefin monomers to form the olefin based polymer. Thermoplastic polymers are a styrene-ethylene-butene-styrene (SEBS) block copolymer (preferably with a styrene content no greater than 35 wt%) and maleic anhydride-modified ethylene-vinyl acetate (EVA) copolymer. Preferably, the Mw of the thermoplastic polymer is from 20,000 to 100,000; preferably at least 25,000, preferably at least 30,000; preferably no more than 85,000, preferably no more than 70,000.

Preferably, the thermoplastic polymer is a styrene ethylene butene styrene (SEBS) block copolymer with a styrene content of equal to or less than 35 wt%, and preferably a Young's modulus of equal to or less than 10 MPa. All individual values and sub-ranges from equal to or less than 10 MPa are included and disclosed herein; for example, the Young's modulus of the thermoplastic elastomer can be equal to or less than 10 MPa, or in the alternative, equal to or less than 9 MPa, or in the alternative, equal to or less than 8 MPa, or in the alternative, equal to or less than 6 MPa, or in the alternative, equal to or less than 4 MPa. In a preferred embodiment, the Young's modulus of the thermoplastic polymer is no less than 0.5 MPa. All individual values and sub-ranges of a styrene content equal to or less than 35 % by weight are included and disclosed herein. For example, the styrene content can be from an upper limit of 35 wt%, or in the alternative, 30 wt%, or in the alternative, 25 wt%. Preferably, polystyrene-saturated polybutadiene-polystyrene and polystyrene-saturated polyisoprene-polystyrene block copolymers comprise polystyrene end-blocks having a number average molecular weight from 5,000 to 35,000 and saturated polybutadiene or saturated polyisoprene mid-blocks having a number average molecular weight from 20,000 to 170,000. The saturated polybutadiene blocks preferably have from 35-55% 1 ,2-configuration and the saturated polyisoprene blocks preferably have greater than 85% 1 ,4-configuration. The total number average molecular weight of the styrenic block copolymer is preferably from 30,000 to 250,000 if the copolymer has a linear structure. Such block copolymers preferably have an average polystyrene content from 10% by weight to 30%, preferably from 10% by weight to 20% by weight.

Preferably the aqueous dispersion of the thermoplastic polymer contains a dispersant. In one preferred embodiment, the dispersant is a C₁₈-C₃₂ aliphatic carboxylic acid, preferably a C₁₈-C₂₈ aliphatic carboxylic acid, preferably a C₂₀-C₂₆ aliphatic carboxylic acid. In one preferred embodiment of the invention, the dispersant is an olefin-acrylic acid copolymer, preferably one having from 10 wt% to 30 wt% acrylic acid, preferably from 15 wt% to 25 wt%. In a preferred embodiment of the invention, other materials such as partially hydrolyzed polyvinyl alcohol, styrene maleic anhydride copolymers, maleic anhydride modified polyethylene, polypropylene, or polyolefin copolymers, maleic anhydride modified styrene-diene block copolymers, or their mixtures may also be used as dispersants. Optionally the conventional cationic, ionic, or non-ionic surfactants can be used in combination with above polymeric dispersing agents. Preferably, the aqueous dispersion of the thermoplastic polymer comprises from 30 to 70 wt% of the thermoplastic polymer (based on total weight of the aqueous dispersion), preferably from 40 to 60 wt%, preferably from 45 to 55 wt%. When the dispersant is a C₁₈-C₃₂ aliphatic carboxylic acid, preferably it is present in an amount from 2 to 10 wt% based on the weight of the thermoplastic polymer, preferably from 2 to 8 wt%, preferably from 3 to 7 wt%. When the dispersant is an olefin-acrylic acid copolymer, preferably it is present in an amount from 15 to 35 wt% based on the weight of the thermoplastic polymer, preferably from 20 to 30 wt%, preferably from 22 to 28 wt%. Preferably, the aqueous dispersion is substantially free of organic solvent, i.e., it contains less than 3 wt% organic solvent based on total dispersion weight, preferably less than 2 wt%, preferably less than 1 wt%, preferably less than 0.5 wt%, preferably less than 0.2 wt%, preferably less than 0.1 wt%. Preferably, solvents which may be present within the stated limits in the aqueous dispersion (from preparation of the thermoplastic polymer) or in the composition are hydrocarbyl solvents, preferably aromatic solvents, preferably toluene.

Preferably, the combined aqueous dispersions of thermoplastic copolymer and rosin comprise at least 20 wt% of the thermoplastic polymer, preferably at least 30 wt%, preferably at least 35 wt%, preferably at least 40 wt%; preferably no more than 80 wt%, preferably no more than 70 wt%, preferably no more than 65 wt%, preferably no more than 60 wt%, percentages based on total weight of dry thermoplastic polymer and rosin. Preferably, the aqueous dispersions of thermoplastic copolymer and rosin comprise at least 20 wt% of the rosin, preferably at least 30 wt%, preferably at least 35 wt%, preferably at least 40 wt%; preferably no more than 80 wt%, preferably no more than 70 wt%, preferably no more than 65 wt%, preferably no more than 60 wt%, percentages based on total weight of dry thermoplastic polymer and rosin.

Preferably, the aqueous rosin dispersion comprises a rosin ester resin, a non-hydrogenated aliphatic C₅ resin, a hydrogenated aliphatic C₅ resin, an aromatic modified C₅ resin, a terpene resin, a hydrogenated C₉ resin, or combinations thereof, where "C₅" and "C₉" refer to the number of carbon atoms in the starting materials used. Preferably, the rosin has a softening point from 25 to 180 °C, preferably from 65 to 160 °C, preferably from 90 to 140 °C. Preferably, the rosin has density from 0.92 g/cc to 1.06 g/cc and has a melt viscosity less than 1000 pascal second (Pa•s) at 175 °C. Preferably, the rosin has a weight-average molecular weight (Mw) from 300 to 2,000. Preferably, the rosin is substantially free of organic solvent, as defined above for the thermoplastic polymer.

Preferably, the aqueous dispersions of thermoplastic copolymer and rosin (collectively, "the adhesive") are mixed together at room temperature, preferably using conventional mixing equipment. The adhesive is coated on a fabric substrate at room temperature. The coating thickness of the adhesive on the fabric preferably is from 2 to 30 microns, preferably from 4 to 15 microns, preferably from 5 to 10 microns. Preferably, the coated fabric is dried to remove water, preferably in an oven at a temperature below 150 °C, preferably below 140 °C, preferably below 130 °C, preferably below 120 °C; preferably at least 100 °C, preferably at least 110 °C. The coated dried fabric is laminated with the polyolefin elastomer, preferably at a temperature from 80 to 180 °C, preferably from 100 to 160 °C, preferably from 115 to 155 °C. Preferably, the compression force during the lamination is from 2 to 50 kN, preferably from 4 to 25 kN, preferably from 8 to 20 kN.

### Examples

### • Coating Procedure

1) Fix the fabric (size ∼20x19 cm) onto a print paper by adhesive tape.
2) Fix the sample from step 1 onto the coater. Select a wire rod. Fix the rod and leave enough space of the tape to hold the glue.
3) Add enough adhesive onto the region with the tape covered.
4) Start the motor and apply the glue quickly.
5) Release the wire rod and clean it quickly. Take out the sample and put it in the hood for ∼5 min and then move into hot oven at 80-120 C for 2 min
6) Take out the sample and put into a hood and allow it to cool to RT.
7) Test coating weight (15-20 gsm) and collect the samples.

### • Lamination Procedure

1) POE sheet should be prepared before lamination.
2) Set the hot press at desired temperature (e.g. 120C), pressure (e.g. 500 kg). Put the PET pad onto the bottom platen of the press. Close the platen at set temperature.
3) Put the POE sheet (15x15 cm) on the top of the primed side of fabric. Insert a tape of paper between the sheet and fabric in one of the beginning part of the laminate for easy release after lamination.
4) Open the press and put the POE//fabric onto the pads. Cover the POE sheet with aluminum foil to prevent the POE from sticking to the platen. Close the press quickly.
5) Start timing and open press at set time (30-60s).
6) Take out the sample and get it cooled at RT with the foil side down to the lab bench surface.
7) Remove the foil and collect the sample.

### A) Raw Materials

- Fabric: The fabric used in this study is a typical commercially available black PET fabric.
- POE sheet: The POE sheet is made from Dow product XUS57551 (0.87 g/cc, 3.35 MFR) which is a blend of INFUSETM and VERSIFYTM.
- Water borne dispersion 1-1: The base resin of the dispersion is FUSABOND C250, a Maleic Anhydride (MAH) modified Ethylene-Vinyl Acetate (EVA) copolymer, and the surfactant package of the dispersion is DMEA neutralized Ethylene -Acrylic Acid (EAA) copolymer. The average particle size of dispersion 1-1 is around 550 nm, solid content is 50.0 wt.%, and the viscosity around 380 cps.
- Water borne dispersion 1-2: The base resin of the dispersion is KRATON G1643, a Styrene Ethylene Butene Styrene (SEBS) block copolymer with a styrene content of 16.6-20.6%, and the surfactant package of the dispersion is DMEA neutralized Ethylene -Acrylic Acid (EAA) copolymer. The average particle size of dispersion 1-2 is around 960 nm, solid content is 50.0 wt.%, and the viscosity around 295 cps.
- Water borne dispersion 2: Water borne rosin dispersion is used as tackifier dispersion, and the surfactant package of the dispersion is DMEA neutralized Ethylene -Acrylic Acid (EAA) copolymer. The average particle size of dispersion 2 is around 550 nm, solid content is 50.0 wt.%, and the viscosity around 580 cps.
Note: All of the waterborne dispersions mentioned above are produced using Dow's mechanical dispersion technology.

### B) Adhesives preparation and application

### 1) Adhesive formulating

The above mentioned FUSABOND C250 dispersion (waterborne dispersion 1-1) or SEBS (waterborne dispersion 1-2) and rosin dispersion (waterborne dispersion 2) were cold blended under stirring with the designed mass ratio. Before coating and lamination trial, stability of the blends was tested regarding average particle size, and the purpose of the testing was to make sure that there were no phase separation issues.

### 2) Coating &Lamination

According to the process described above, the fabric was coated with the prepared adhesive, then the coated fabric was placed in an oven for 3 minutes at 120°C for water evaporation and film formation purpose. The coated fabric was then laminated together with POE sheet using a compression molder at 115°C with the compression force of 4 kN.

### 3) Peel strength testing (ASTM D751-06, ASTM D2724-03)

The laminated POE to PET fabric samples were cut into 3 cm x15 cm rectangular specimens and the peel strength was measured using the Instron by 180 deg peel test with a crosshead speed of 300 mm/min. The average load (kgf) was recorded and the average peel strength (Kgf/3cm) was calculated

### C) Example description

The rosin dispersion was an aqueous rosin ester gum sold under the trade name ROSIN GLYCEROL ESTER 202.

### Example 1

Water borne FUSABOND C250/Rosin dispersion (solid mass ratio, 50/50) blend; with the solid content of 45.0 wt%.

### Example 2

Water borne KRATON G1643/Rosin dispersion (solid mass ratio, 50/50) blend; with the solid content of 45.0 wt%.

### Comparative Example 1

Water borne FUSABOND C250 dispersion with the solid content of 45.0 wt.%.

### Comparative Example 2

Water borne KRATON G1643 dispersion with the solid content of 45.0 wt.%.

### Comparative Example 3

Water borne rosin dispersion with the solid content of 45.0 wt.%.

### D) Results and Discussion

Table 1 shows the bonding strength of the laminated samples prepared by using different adhesives. The bonding strength of a blank sample (POE sheet was directly laminated with fabric without any adhesive in between.) is also presented.

**Table 1**

| Sample | Average peel strength (Kgf/3 cm) |
|---|---|
| Ex. 1 | 2.49 |
| Ex. 2 | 2.71 |
| C. Ex. 1 | 0.84 |
| C. Ex. 2 | 0.82 |
| C. Ex. 3 | 0.12 |
| blank | 0.48 |

### Observations:

- It is observed from Table 1 that the Examples show a peel strength more than 2.0 Kgf/3 cm, which can meet the peel strength requirements, but the Comparative Examples did not meet the performance requirements.
- It is believed that the blends of SEBS or EVA-g-MAH dispersion and rosin dispersion have good penetration to the fabric structure during the coating process and act as hot melt adhesives after drying process. Rosin could be the effective tackifier to the base resin, and the unexpected synergistic effect enhances the adhesion.

### Conclusion:

The inventive examples (blends of SEBS or EVA-g-MAH dispersion and rosin dispersion) offer a good balance of performance and cost, including the environmental benefit.

## Claims

1. A method for bonding a fabric to a polyolefin elastomer; said method comprising applying to the fabric: (a) from 40 to 80 wt% of an aqueous dispersion of a thermoplastic polymer; and (b) from 60 to 20 wt% of an aqueous dispersion of a rosin, wherein percentages are based on total dry weight of thermoplastic polymer and rosin, wherein the thermoplastic polymer is a styrene-ethylene-butene-styrene block copolymer or a maleic anhydride-modified ethylene-vinyl acetate copolymer.

2. The method of claim 1 in which the rosin is a rosin ester resin, a non-hydrogenated aliphatic C₅ resin, a hydrogenated aliphatic C₅ resin, an aromatic modified C₅ resin, a terpene resin, a hydrogenated C₉ resin, or combinations thereof.

3. The method of claim 2 in which the polyolefin elastomer comprises at least 50 wt% polymerized units of olefinic monomers.

4. The method of claim 3 in which the fabric comprises at least 50 wt% polyamide or polyester fiber.

5. The method according to any one of the preceding claims in which the thermoplastic polymer is a styrene-ethylene-butene-styrene block copolymer having a styrene content no greater than 35 wt%.

## Patentansprüche

1. Ein Verfahren zum Binden eines Gewebes an ein Polyolefinelastomer; wobei das Verfahren das Aufbringen auf das Gewebe von Folgendem beinhaltet: (a) zu 40 bis 80 Gew.-% einer wässrigen Dispersion eines thermoplastischen Polymers; und (b) zu 60 bis 20 Gew.-% einer wässrigen Dispersion eines Kolophoniums, wobei sich die Prozentangaben auf das Gesamttrockengewicht des thermoplastischen Polymers und des Kolophoniums beziehen, wobei das thermoplastische Polymer ein Styrol-Ethylen-Buten-Styrol-Blockcopolymer oder ein maleinsäureanhydridmodifiziertes EthylenVinylacetat-Copolymer ist.

2. Verfahren gemäß Anspruch 1, wobei das Kolophonium ein Kolophoniumesterharz, ein nicht hydriertes aliphatisches C₅-Harz, ein hydriertes aliphatisches C₅-Harz, ein aromatisch modifiziertes C₅-Harz, ein Terpenharz, ein hydriertes Cg-Harz oder Kombinationen davon ist.

3. Verfahren gemäß Anspruch 2, wobei das Polyolefinelastomer zu mindestens 50 Gew.-% polymerisierte Einheiten von olefinischen Monomeren beinhaltet.

4. Verfahren gemäß Anspruch 3, wobei das Gewebe zu mindestens 50 Gew.-% Polyamid- oder Polyesterfaser beinhaltet.

5. Verfahren gemäß einem der vorhergehenden Ansprüche, wobei das thermoplastische Polymer ein Styrol-Ethylen-Buten-Styrol-Blockcopolymer mit einem Styrolgehalt von nicht mehr als 35 Gew.-% ist.

## Revendications

1. Un procédé pour lier un tissu à un élastomère de polyoléfine ; ledit procédé comprenant l'application sur le tissu : (a) de 40 à 80 % en poids d'une dispersion aqueuse d'un polymère thermoplastique ; et (b) de 60 à 20 % en poids d'une dispersion aqueuse d'une colophane, où les pourcentages sont rapportés au poids sec total de polymère thermoplastique et de colophane, où le polymère thermoplastique est un copolymère séquencé styrène-éthylène-butène-styrène ou un copolymère d'éthylène-acétate de vinyle modifié par l'anhydride maléique.

2. Le procédé de la revendication 1 dans lequel la colophane est une résine d'ester de colophane, une résine en C₅ aliphatique non hydrogénée, une résine en C₅ aliphatique hydrogénée, une résine en C₅ modifiée aromatique, une résine terpène, une résine en Cg hydrogénée, ou des combinaisons de celles-ci.

3. Le procédé de la revendication 2 dans lequel l'élastomère de polyoléfine comprend au moins 50 % en poids d'unités polymérisées de monomères oléfiniques.

4. Le procédé de la revendication 3 dans lequel le tissu comprend au moins 50 % en poids de fibre polyamide ou polyester.

5. Le procédé selon n'importe laquelle des revendications précédentes dans lequel le polymère thermoplastique est un copolymère séquencé styrène-éthylène-butène-styrène ayant une teneur en styrène ne dépassant pas 35 % en poids.
